Europäisches Patentamt

European Patent Office

Office européen des brevets

(19)

(11) Veröffentlichungsnummer: **0 014 340**
A1

(12) **EUROPÄISCHE PATENTANMELDUNG**

(21) Anmeldenummer: 80100185.0

(22) Anmeldetag: 16.01.80

(51) Int. Cl.³: **C 12 G 3/08**

(30) Priorität: 19.01.79 DE 2902067
28.03.79 DE 2912316

(43) Veröffentlichungstag der Anmeldung:
20.08.80 Patentblatt 80 17

(84) Benannte Vertragsstaaten:
AT BE CH FR GB IT LU NL SE

(71) Anmelder: Müller, Adam, Dr.

D-8421 St. Johann/Hallertau (DE)

(72) Erfinder: Müller, Adam, Dr.

D-8421 St. Johann/Hallertau (DE)

(74) Vertreter: Zumstein, sen., Fritz, Dr. Dr. F. Zumstein sen.,
Dr. E. Assmann Dr. R. Koenigsberger et al,
Dipl.-Phys. R. Holzbauer Dipl.-Ing. F. Klingseisen Dr. F.
Zumstein jun. Bräuhausstrasse 4
D-8000 München 2 (DE)

(54) Verfahren und Vorrichtung zum Vermindern des Alkoholgehaltes alkoholischer Getränke.

(57) Die Erfindung betrifft ein Verfahren, mit dem einem vollständig oder teilweise gegorenen Getränk mittels unter
hohem Druck stehendem $CO_2$ Alkohol entzogen wird, sowie
eine Vorrichtung zur Durchführung dieses Verfahrens.

EP 0 014 340 A1

Verfahren und Vorrichtung zum Vermindern des
Alkoholgehaltes alkoholischer Getränke sowie
nach diesem Verfahren hergestellte, an Alkohol verarmte Getränke

---

Die Erfindung betrifft ein Verfahren zur Verminderung des
Alkoholgehaltes alkoholischer Getränke, wie Bier, Wein,
Schaumwein oder Sekt, auch in angegorenem Zustand. Bei
dem Getränk kann es sich um irgendein Getränk handeln, bei
dem Alkohol durch Gärung erzeugt wird. Das Getränk kann
auch ein weinähnliches Getränk, wie Apfel- oder Birnenwein,
sein.

Verfahren zur Verminderung des Alkoholgehaltes alkoholischer Getränke sind seit langem bekannt. So wurden beispielsweise alkoholarme Biere durch Verwendung besonderer
Hefen oder durch eine unvollständige Gärung hergestellt.
Der Geschmack dieser Biere war jedoch nicht mit dem eines
normalen Bieres vergleichbar, so daß diese Verfahren keine größere Verbreitung erfuhren. Man hat auch versucht,
Bieren den Alkohol dadurch zu entziehen, daß man normal
hergestellte Biere einer Vakuumdestillation unterzog. Jedoch auch bei diesen Verfahren wird die Qualität eines
Bieres negativ beeinflußt. Ein erst in letzter Zeit entwickeltes Verfahren besteht darin, daß man einem Bier
mittels Umkehrosmose Alkohol entzieht. Dieses Verfahren
ergibt zwar bessere Ergebnisse, jedoch konnte bis heute
noch kein geeignetes Material zur Herstellung der hierfür
notwendigen, semipermeablen Wände gefunden werden.

Auch andere Herstellungsverfahren für praktisch alkoholfreie oder alkoholarme Biere sind bekannt. Die Verfahren,
mit denen der Alkoholgehalt gemindert wird, sind bei-

spielsweise Destillation, Vakuumverdampfung oder partielles Ausfrieren. Auch eine Absorption mittels Kieselgel oder poröser absorbierender Harze wird angewandt. Schwach gärende Hefen oder eine Gärunterbrechung sind ebenfalls Mittel zur Erzielung eines Getränkes mit geringem Alkoholgehalt. Schließlich seien noch eine geeignete Gärführung, die Verwendung extraktarmer Würzen und die insbesondere in letzter Zeit angewandte Umkehrosmose genannt.

Bei all diesen Verfahren entstehen jedoch erhebliche Mengen an Gärungsnebenprodukten, so daß bei diesen bekannten Verfahren nicht nur der Alkoholgehalt reduziert, sondern auch die Bekömmlichkeit des Bieres vermindert wird.

In der DE-AS 1 492 190 ist weiterhin ein Verfahren zur Trennung von Stoffgemischen beschrieben, bei dem Stoffgemische, die organische Verbindungen enthalten, mittels eines unter Druck stehenden Gases aufgetrennt werden. Dieses bekannte Verfahren ist jedoch offensichtlich nicht auf die Abtrennung von niederen Alkoholen anwendbar, da dort Methanol und Äthanol als Verbindungen aufgeführt werden, die mit diesem Verfahren nicht abgetrennt werden können.

Die der Erfindung zugrundeliegende Aufgabe besteht nun darin, einem alkoholischen Getränk, wie Bier oder Wein, auch im angegorenen Zustand, eine vorbestimmte Menge Alkohol zu entziehen, ohne daß die Qualität des Getränkes merklich beeinträchtigt wird.

Diese Aufgabe wird gemäß der Erfindung dadurch gelöst, daß man dieses alkoholische Getränk in ein Reaktionsgefäß einbringt und gleichzeitig als Lösungsmittel für den Alkohol unter Druck stehendes $CO_2$ einleitet und dieses einwirken läßt, wobei man den Arbeitsdruck auf mindestens 5 bar und die Arbeitstemperatur auf höchstens 35°C einstellt und anschließend das mit Alkohol angereicherte $CO_2$ abzieht, entspannt und in den Entspannungsbehälter einleitet und den dort anfallenden Alkohol einerseits und das von Alkohol befreite $CO_2$ andererseits aus dem Entspannungsbehälter abzieht und schließlich aus dem Druckbehälter das an Alkohol verarmte Getränk entnimmt.

Man kann auch so vorgehen, daß man ein angegorenes Getränk vor Ablauf der üblichen Gesamtgärungszeit den Gärungsbehälter entnimmt, in ein Reaktionsgefäß einleitet und bei einer Temperatur unter 35°C mit unter Druck stehendem $CO_2$ solange behandelt, bis dem Getränk durch das $CO_2$ die vorbestimmte Alkoholmenge entzogen worden ist.

Ein so behandeltes Getränk enthält noch weitgehend die Geschmacksstoffe eines Getränkes, das die normale Gärungszeit durchlaufen hat, jedoch wird der Gehalt an unerwünschten Gärungsnebenprodukten sehr gering gehalten. Solche Gärungsnebenprodukte sind schwefelhaltige Verbindungen, wie Methylmerkaptan, Aldehyde, wie Azetaldehyd, Ketone, wie Diacetyl, Ester, wie Isoamylacetat, höhere Alkohole, wie 2-Methylbutanol-1, und verschiedene Fettsäuren. Die Gärung kann in üblicher Weise als Kaltgärung oder Warmgärung vorgenommen werden, wobei auch eine Gärung unter Druck in Betracht kommt. Die Gärungszeiten können relativ gering gehalten werden, es genügt beispielsweise 1/10 bis 1/2 der üblichen Hauptgärungszeit, vorzugsweise 1/4 bis 1/3 dieser Zeit. Durch diese Verkürzung dieser Hauptgärungszeit wird das gesamte Herstellungsverfahren erheblich verkürzt, was einen bedeutenden Vorteil des erfindungsgemäßen Verfahrens darstellt. Grundsätzlich ist es auch möglich, das Getränk erst während der Nachgärung zu entnehmen und zu behandeln, jedoch ist dann die Abkürzung der gesamten Herstellungszeit geringer.

Wird das Getränk, beispielsweise das Jungbier, während der Hauptgärungzeit entnommen, dann schließt sich üblicherweise eine Nachgärung an, die jedoch ebenfalls verhältnismäßig kurz sein kann, weil die während der Hauptgärung entstandenen Gärungsnebenprodukte zum größten Teil entfernt sind und weil keine weitere Alkoholbildung in der Nachgärung angestrebt wird. Das Getränk, das die oben beschriebenen Verfahrensstufen durchlaufen hat, kann in an sich bekannter Weise filtriert werden.

Der Arbeitsdruck im Reaktionsgefäß sollte mindestens 5 bar betragen, kann jedoch merklich, z.B. auf wenigstens 30 bar, erhöht werden, was sowohl auf die Behandlungszeit als auch auf den Grad des Alkoholentzugs günstige Auswirkungen haben kann. Als zweckmäßig hat sich ein Druck von 80 bis 150 bar erwiesen, jedoch können auch höhere Drucke bis beispielsweise 180 oder sogar bis 250 bar Anwendung finden. Bei noch höheren Drucken ist das Verfahren zwar noch durchführbar, jedoch steigen die Kosten für die Anlage und deren Betrieb dann erheblich.

Die Temperatur sollte grundsätzlich so niedrig als möglich sein, man kann bis zu einer unteren Temperatur unter dem Gefrierpunkt des Wassers und sogar bis -10° gehen, jedoch sind Temperaturen von 0 bis 20°, höchstens aber 35°C, brauchbar. Die Behandlungszeit wählt man natürlich so kurz als möglich, und man kann bereits bei einer Behandlungszeit von 1/2 Minute einen merklichen Alkoholentzug feststellen. Für praktische Zwecke werden jedoch üblicherweise längere Behandlungszeiten wünschenswert sein, beispielsweise zwischen 5 bis 15 Minuten, unter Umständen sogar Behandlungszeiten bis zu 1 Stunde.

Die Behandlungszeit im Reaktionsgefäß kann man dadurch verkürzen, daß man für eine große Oberfläche des Gefäßes sorgt, indem man Füllkörper in das Reaktionsgefäß gibt. Diese Füllkörper sollen das Reaktionsgefäß wenigstens zur Hälfte, vorzugsweise wenigstens zu zwei Drittel, ausfüllen.

Der Verbrauch von $CO_2$ kann sehr verschieden sein, er kann zwischen 1 und 150 kg pro Stunde und kg Getränk liegen, je nach Art und Alkoholgehalt des Getränks. Bei Bier liegt der Verbrauch an $CO_2$ zwischen 1 und 100 kg, vorzugsweise zwischen 5 und 50 kg. Bezogen auf den Alkoholgehalt liegt der Verbrauch zwischen 10 g und 1 kg pro Gramm Alkohol, wenn man Behandlungszeiten von 1/2 Minute bis 1 Stunde in Betracht zieht. Mit zunehmender Behandlungszeit wird der Verbrauch höher.

Der Alkoholentzug kann sehr weitgehend sein. In der Regel wird man den Alkoholgehalt auf 1 bis 2% reduzieren. Ein Getränk mit 2% Alkohol kann im kontinuierlichen Verfahren auch so hergestellt werden, daß man kontinuierlich auf 1% reduziert, im Bypaß jedoch nichtreduzierten Alkohol strömen läßt und dann beide Ströme in einem Mischbehälter mischt.

Das Verfahren kann chargenweise oder kontinuierlich durchgeführt werden. Bei kontinuierlicher Durchführung ist eine Überwachung durch an sich bekannte elektronische Steuer- und Regelgeräte zweckmäßig. Wählt man das kontinuierliche Verfahren, dann müssen sowohl das Getränk als auch das $CO_2$ unter Druck in das Reaktionsgefäß eingeleitet werden. Das $CO_2$ kann im Kreislauf vom Reaktionsgefäß zum Entspannungsgefäß und nach Wiederherstellung des nötigen Druckes wieder in das Reaktionsgefäß zurückgeleitet werden. Das unter Druck in Kreislauf durch das Reaktionsgefäß zu leitende $CO_2$ kann einem Vor-

rat entnommen werden, es kann jedoch auch das $CO_2$ ausgenützt werden, das bei der Gärung entsteht. Dieses $CO_2$ wird dem geschlossenen Gärungsbehälter entnommen und durch einen Kompressor auf Druck gebracht und in den $CO_2$-Kreislauf eingeleitet. Gewisse Schwierigkeiten bereitet unter Umständen die Entnahme des behandelten Getränkes. Entspannt man dieses Getränk zu schnell, so kann eine störende Schaumbildung auftreten. Diese kann jedoch verhindert werden, wenn man die Entspannung langsam, z.B. stufenweise oder kontinuierlich, vornimmt. Damit ein solcher langsamerer Druckabbau vorgenommen werden kann, muß die Entnahme über eine oder mehrere Drosselstellen, z.B. Druckschleusen für Flüssigkeiten, erfolgen, in denen jeweils eine Druckminderung eintritt. Es ist natürlich dafür zu sorgen, daß das Getränk während des Druckabbaus ständig in Kontakt mit einem mit $CO_2$ gefüllten Raum steht, damit $CO_2$ in diesen Raum entweichen kann.

Die Einleitung des $CO_2$ in das Reaktionsgefäß erfolgt vorteilhafterweise in feinster Verteilung. Dies kann so erreicht werden, daß man in das Reaktionsgefäß eine Sperre einbaut, die einerseits für das $CO_2$ gut durchlässig ist, andererseits den Durchtritt des Getränkes jedoch praktisch verhindert. Durch diese feine Verteilung des $CO_2$ wird für die Reaktion des $CO_2$ mit dem Alkohol eine große Oberfläche geschaffen. Eine Vergrößerung der Oberfläche kann auch oder zusätzlich durch Einführung von Füllkörpern in den Reaktionsraum erfolgen. Auch Strömungsumlenkeinrichtungen können mit Vorteil verwendet werden. Um eine mögliche Schaumbildung zu vermeiden, deckt man zweckmäßig den das Getränk enthaltenden Raum gegen die Austrittsstelle des $CO_2$ aus dem Reaktionsgefäß ebenfalls mit einer Sperre ab, die im wesentlichen nur angereichertes $CO_2$ durchläßt.

Der als Nebenprodukt anfallende Alkohol, worunter hier natürlich Äthylalkohol zu verstehen ist, kann als Brennstoff oder Lösungsmittel verwendet werden, $CO_2$ kann im Kreislauf geführt werden, so daß kaum Verluste auftreten.

Eine beispielsweise Ausführungsform einer zur Durchführung des Verfahrens geeigneten Vorrichtung wird im folgenden anhand der Zeichnung beschrieben. In dieser Zeichnung zeigt:

Fig. 1          schematisch eine solche Vorrichtung;

Fig. 2          ebenfalls schematisch die Ausbildung eines Reaktionsgefäßes, und

Fig. 3          eine andere Ausführungsform eines solchen Reaktionsgefäßes im Schnitt;

Fig. 4          stellt eine Anlage zur Behandlung von angegorenem Bier dar.

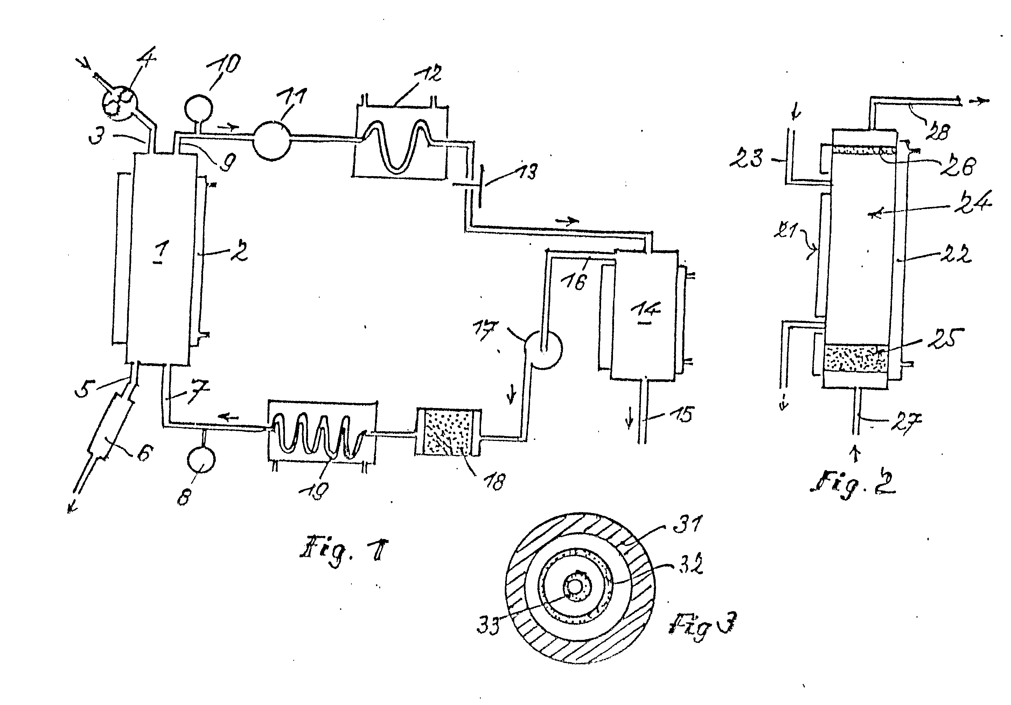

In Fig. 1 ist das Reaktionsgefäß 1 mit einem Wärmeaustauschmantel 2 umgeben, der zur Einhaltung der vorbestimmten, gewünschten Temperatur im Reaktionsgefäß dient. Durch das Einleitungsrohr 3 wird das zu behandelnde Getränk eingeleitet, nachdem es, bei einem kontinuierlichen Verfahren vorher in einer Druckschleuse 4 auf den Arbeitsdruck gebracht worden ist. Eine solche Druckschleuse kann z.B. aus einer Zahnradpumpe bestehen. Durch die Leitung 5 wird das behandelte Getränk ausgetragen und in einer schematisch angedeuteten Einrichtung 6 vom Arbeitsdruck allmählich entspannt. Das $CO_2$ wird durch die Leitung 7 unter einem durch das Manometer 8 bestimmten Druck in das Reaktionsgefäß eingeleitet und bei 9 unter einem durch das Manometer 10 bestimmten Druck aus dem Reaktionsgefäß entnommen. Durch einen Durchflußmesser 11 wird die Menge des mit Alkohol angereicherten $CO_2$ bestimmt. Ein Wärmeaustauscher 12 kann zur Einstellung der Temperatur vorgesehen werden. Ein schematisch angedeutetes Entspannungsventil 13 dient dazu, den Arbeitsdruck auf einen Wert zu vermindern, bei dem sich dann im Entspannungsbehälter 14 $CO_2$ und Alkohol voneinander trennen. Der so erhaltene Alkohol wird durch die Leitung 15 und das $CO_2$ durch die Leitung 16 abgezogen und in der Pumpe 17 wieder auf den Arbeitsdruck gebracht. Falls eine Reinigung des $CO_2$ erforderlich ist, kann hierfür eine Filtereinrichtung 18 vorgesehen werden, an die sich ein Wärmeaustauscher 19 anschließen kann.

Bei der in Fig. 2 gezeigten Ausführungsform des Reaktionsgefäßes 21, das von einem Wärmeaustauschmantel 22 umgeben ist, wird das alkoholhaltige Getränk durch die Leitung 23 in eine Kammer 24 eingeleitet, die einerseits von den Wänden des Reaktionsgefäßes und andererseits von Sperren 25 und 26 begrenzt ist. Die Sperre 25, z.B. eine Platte aus Sintermaterial, dient dazu, das bei 27 eingeleitete $CO_2$ in feinster Verteilung in den das Getränk enthaltenden Raum einzuleiten und den Austritt des Getränks in den $CO_2$-Einlaß zu verhindern. Das mit Alkohol angereicherte $CO_2$ tritt dann durch die Leitung 28 aus dem Reaktionsgefäß aus.

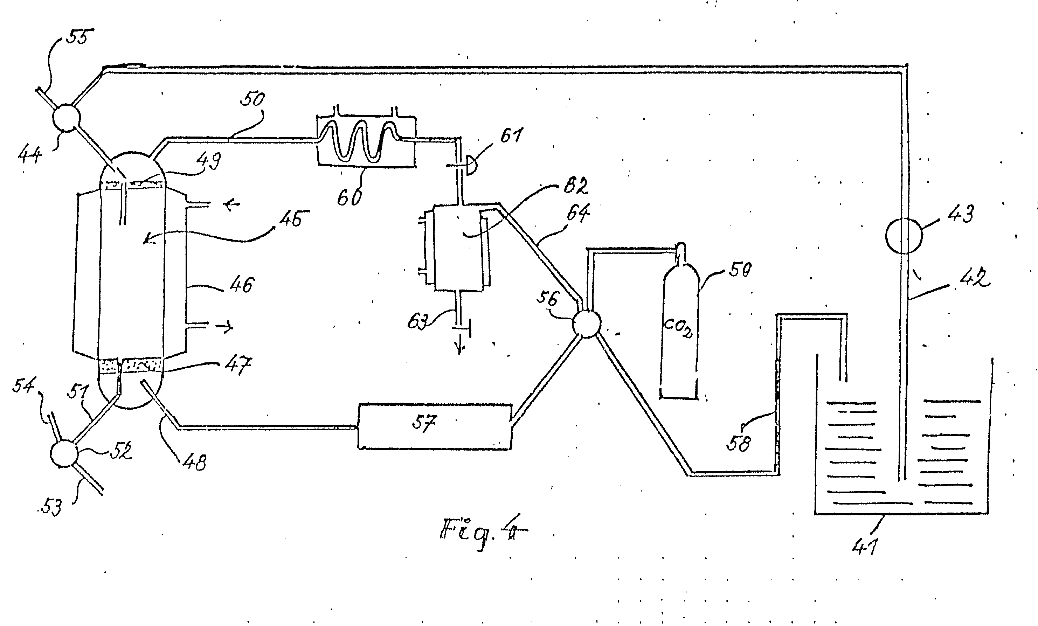

Fig. 3 zeigt schematisch eine andere Anordnung eines Reaktionsgefäßes. Dieses Gefäß besteht aus drei konzentrischen Druckbehältern, wobei der äußere, rohrförmige Druckbehälter 31 das eigentliche Reaktionsgefäß darstellt, das beispielsweise aus Stahl gefertigt ist. Im Inneren befinden sich zwei konzentrische Rohre 32 und 33, die aus einem Material bestehen, das zwar $CO_2$ durchläßt, den Durchtritt des flüssigen Getränks aber nicht zuläßt. Das Getränk befindet sich im Raum zwischen den beiden inneren Rohren 32 und 33, während das zugeführte $CO_2$ in den Ringraum zwischen dem Reaktionsgefäß 31 und dem äußeren der beiden Innenrohre 32 strömt. Das Innenrohr 33 führt dann das mit Alkohol angereicherte $CO_2$ ab.

Zusätzlich zu der dargestellten Vorrichtung kann eine nicht gezeigte Bypaßleitung für ein in seinem Alkoholgehalt nicht vermindertes Getränk vorgesehen werden, das dann mit dem behandelten Getränk verschnitten wird.

Bei der in Fig. 4 dargestellten Anlage wird aus einem Gärungsbehälter 41 über eine Leitung 42, in die eine Pumpe 43 eingesetzt ist, das angegorene Jungbier entnommen. Das Bier wird über ein Mehrwegventil 44 in den Reaktionsbehälter 45 eingeleitet, der mit einem Mantel 46 versehen ist, der zu Einstellung der Temperatur des Reaktionsbehälters dient. In der Nähe des Behälterbodens dieses Reaktionsgefäßes ist eine Filterplatte 47 vorgesehen, durch die das durch die Leitung 48 zugeführte $CO_2$ in den Reaktionsraum eintritt. Ein Sieb 49 im oberen Teil des Reaktionsgefäßes dient zur Abtrennung des Schaums, um zu verhindern, daß mit dem mit Alkohol angereicherten $CO_2$ auch Schaum und Bier durch die Leitung 50 austritt. Im unteren Teil des Reaktionsgefäßes 45 ist ein Auslaß 51 vorgesehen, der zu einem Mehrwegventil 52 führt. Dieses Ventil hat je nach seiner Stellung Verbindung mit einem Auslaß 53 für das an Alkohol verarmte Bier sowie mit einem Auslaß 54, der zusammen mit einem Einlaß 55 die Spülung des Gefäßes für Reinigungszwecke erlaubt. Das $CO_2$ wird entweder einem Vorrat 59 entnommen und über ein Mehrwegventil 56 dem Kompressor 57 zugeführt, oder es wird über die Ansaugleitung 58 aus dem

geschlossenen Gärgefäß $CO_2$ entnommen und allein oder zusammen mit aus dem Vorrat 59 stammendem $CO_2$ dem Kompressor zugeführt. Die Leitung 50 führt über einen Wärmeaustauscher 60 zu einem Entspannungsventil 61 und von dort in den Entspannungsbehälter 62. In diesem Entspannungsbehälter wird das $CO_2$ entspannt, das Getränk tritt durch die Leitung 63 aus, während das entspannte $CO_2$ über die Leitung 64 dem Mehrwegventil 56 zugeführt wird, von wo aus es in den Kompressor 57 geleitet wird.

Dr. F. Zumstein sen. · Dr. E. Assmann · Dr. R. Koenigsberger
Dipl.-Phys. R. Holzbauer · Dipl.-Ing. F. Klingseisen · Dr. F. Zumstein jun.
PATENTANWÄLTE

8000 München 2 · Brauhausstraße 4 · Telefon Semmel-Nr 22 53 41 · Telegramme Zumpat Telex 5 29 979

00 14340

— 11 —

Dr. Adam Müller, St.Johann/Hallertau
==========================================

P a t e n t a n s p r ü c h e
=====================================

1. Verfahren zur Verminderung des Alkoholgehalts in Bier, Wein, Schaumwein oder Sekt, d a d u r c h   g e k e n n z e i c h n e t , daß man dieses Getränk in ein Reaktionsgefäß einbringt und gleichzeitig als Lösungsmittel für den Alkohol unter Druck stehendes $CO_2$ einleitet und dieses einwirken läßt, wobei man den Arbeitsdruck auf mindestens 5 bar und höchstens 250 bar und die Arbeitstemperatur auf mindestens 10°C und höchstens 35 °C einstellt und anschließend das mit Alkohol angereicherte $CO_2$ abzieht, entspannt und in den Entspannungsbehälter einleitet und den dort anfallenden Alkohol einerseits und das von Alkohol befreite $CO_2$ andererseits aus dem Entspannungsbehälter abzieht und schließlich aus dem Reaktionsgefäß das an Alkohol verarmte Getränk entnimmt.

BAD ORIGINAL

- 12 -

2. Verfahren nach Anspruch 1, dadurch gekennzeichnet, daß man den $CO_2$ Druck auf 80 bis 150 bar einstellt.

3. Verfahren nach Anspruch 1 oder 2, dadurch gekennzeichnet, daß man die Temperatur auf 0 bis 20 $^{\circ}$C einstellt.

4. Verfahren nach Anspruch 1 bis 3, dadurch gekennzeichnet, daß man die Behandlungszeit auf 1/2 Minute bis 1 Stunde, vorzugsweise auf 5 bis 15 Minuten einstellt.

5. Verfahren nach Anspruch 1 bis 4, dadurch gekennzeichnet, daß man bei der Behandlung von Bier 1 bis 100 kg $CO_2$ pro Stunde und kg Bier einsetzt.

6. Verfahren nach Anspruch 1 bis 5, dadurch gekennzeichnet, daß man als Ausgangsmaterial ein angegorenes Getränk verwendet, das man vor Ablauf der üblichen Gärungszeit dem Gärungsbehälter entnimmt, in ein Reaktionsgefäß einleitet und solange mit unter Druck stehendem $CO_2$ behandelt, bis dem Getränk die vorbestimmte Alkoholmenge entzogen worden ist, worauf man das so behandelte Getränk gegebenenfalls einer Nachgärung unterwirft.

7. Verfahren nach Anspruch 6, dadurch gekennzeichnet, daß man die Entnahme des angegorenen Getränks nach 1/10 bis der Hälfte der üblichen Hauptgärungszeit, vorzugsweise nach 1/4 bis 1/3 dieser Zeit vornimmt.

8. Verfahren nach Anspruch 6 oder 7, dadurch gekennzeichnet, daß man bei einer Behandlungsdauer von 1/2 Minute bis 1 Stunde 10 g bis 10 000 g vorzugsweise 10 bis 1000 g und insbesondere 200 bis 1200 g $CO_2$ pro g und Stunde des zu entziehenden Alkohols auf das Getränk einwirken läßt.

9. Verfahren nach Anspruch 1 bis 8, dadurch gekennzeichnet, daß das Verfahren kontinuierlich durchgeführt wird.

10. Vorrichtung zur Durchführung des Verfahrens nach einer der Ansprüche 1 bis 9 mit einem druckfesten Reaktionsgefäß, das einen Einlaß für das zu behandelnde Getränk, einen Auslaß für das behandelte Getränk, einen Einlaß für unter Druck stehendes $CO_2$ sowie einen Auslaß für alkoholangereichertes $CO_2$ aufweist und einen Entspannungsgefäß, das über ein Entspannungsventil mit dem $CO_2$-Auslaß des Reaktionsgefäßes verbunden ist, wobei der Entspannungsbehälter einen Auslaß für $CO_2$ und einen Auslaß für Alkohol aufweist, mit einer am Auslaß des Reaktionsgefäßes angebrachten Entspannungseinrichtung, in der das behandelte Getränk in Wechselwirkung mit $CO_2$ steht und mittels einer oder mehrerer Druckschleusen für Flüssigkeiten stufenweise oder kontinuierlich von Druck entlastet wird, und für eine kontinuierliche Verfahrensweise mit einer Hochdruckschleuse am Getränkeeinlaß durch die das Getränk auf den Arbeitsdruck bringbar ist, und einer Pumpe am $CO_2$-Auslaß des Entspannungsbehälters, durch die das entspannte $CO_2$ wieder auf Druck bringbar und im Kreislauf dem Einlaß des Reaktionsgefäßes zuführbar ist,

dadurch gekennzeichnet, daß das Reaktionsgefäß die Form eines Rohres aufweist, und daß in diesem Reaktionsgefäß zwei weitere, für $CO_2$ durchlässige, für Flüssigkeit jedoch praktisch undurchlässige, konzentrische Rohre vorgesehen sind, wobei in den Ringraum zwischem dem äußeren Innenrohr und der Reaktionsgefäßwand das eingeführte $CO_2$ aufnehmbar ist, während in den Ringraum zwischen den beiden Innenrohren das Getränk zu- und daraus abführbar ist, und das innere Innenrohr das an Alkohol angereicherte $CO_2$ aufnehmend und abführend ist und für eine kontinuierliche Verfahrensweise die Hochdruckschleuse eine Zahnradpumpe oder ein Turbokompressor ist.

11. Vorrichtung nach Anspruch 10, dadurch gekennzeichnet, daß der das Getränk aufnehmende Raum des Reaktionsgefäßes mit Füllkörpern gefüllt ist oder Strömungsumlenkeinrichtungen enthält.

12. Vorrichtung nach Anspruch 10 bis 11, gekennzeichnet durch ein im $CO_2$-Rücklauf angeordnetes Klärfilter (18).

13. Vorrichtung nach Anspruch 10 bis 12, gekennzeichnet durch einen im $CO_2$-Rücklauf vor seine Einführung in das Reaktionsgefäß angeordneten Wärmeaustauscher (19) sowie gegebenenfalls durch einen weiteren, im $CO_2$-Überlauf von dem Reaktionsgefäß zu dem Entspannungsgefäß angeordneten Wärmeaustauscher (12).

14. Vorrichtung nach einer der Ansprüche 10 bis 13, gekennzeichnet durch einen am $CO_2$-Auslaß des Reaktionsgefäßes angebrachten Durchflußmesser.

Fig. 2

Fig. 1

Fig. 3

Fig. 4

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FOOD TECHNOLOGY, Band 24, November 1970, Seiten 1282-1286 Inst. for Food Technologists, Chicago, U.S.A. W.G. SCHULTZ et al.: "Liquid Carbon Dioxide for Selective Aroma Extraction" <br><br> * Seite 1282, Mittelspalte, Zeilen 9-28, Tabelle 1; Seite 1283, Abbildung 1; Seite 1283, rechte Spalte, Zeilen 4-18; Seite 1284, Mittelspalte, Zeilen 2-7; Seite 1285, Tabelle 2, linke Spalte, Zeilen 36,37 * <br><br> -- | 1-5,8, 9,12-14 |
| | CHEMIE INGENIEUR TECHNIK, Band 50, Nr. 11, November 1978, Seiten 842-849, Verlag Chemie GmbH R. EGGERS et al.: "Entwicklung und Projektierung von Anlagen zur Hochdruck-Extraktion von Naturstoffen" <br><br> * Seite 842, rechte Spalte, Punkt 1; Seite 843, linke Spalte, Punkt d; Seite 844, Abbildungen 3,4; Seite 845, rechte Spalte, Punkte 1,3 * <br><br> -- | 1-5,8, 9,12-14 |
| A | GB - A - 1195 AD 1910 (O.G.C.L.J. OVERBECK) <br><br> * Insgesamt * <br><br> -- | 1,4,9 |
| A | DE - C - 712 249 (H. PLAUSON) <br><br> * Insgesamt * <br><br> -- | 1,3,9-11 |
| A | DE - C - 733 233 (J. KRIEGLMEYER) <br><br> ./. | 1,9,11-13 |

**KLASSIFIKATION DER ANMELDUNG (Int.Cl.³)**

C 12 G 3/08

**RECHERCHIERTE SACHGEBIETE (Int Cl.³)**

C 12 G 3/08
C 12 H 1/14
B 01 D 19/00
11/04
12/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort: | Abschlußdatum der Recherche | Prüfer |
|---|---|---|
| Den Haag | 01-05-1980 | GALLIGANI |

EPA form 1503.1 06 78

Europäisches
Patentamt

**EUROPÄISCHER RECHERCHENBERICHT**

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | * Insgesamt * | |
| | -- | |
| A | US - A - 1 333 457 (G.B. SIPPEL, G.J. PATITZ) <br> * Seite 2, Zeilen 23-25; Ansprüche * | 1,4,9 |
| | -- | |
| A | GB - A - 136 448 (H.C.M. FRANKS) <br> * Seite 1, Zeilen 6-8; Seite 2, Zeilen 44-52 * | 1-5 |
| | ---- | |

KLASSIFIKATION DER
ANMELDUNG (Int.Cl. ²)

RECHERCHIERTE
SACHGEBIETE (Int. Cl. ³)